# FASCICULE DE BREVET EUROPEEN

(11) **EP 2 769 118 B1**
(45) Date de publication et mention de la délivrance du brevet: **06.11.2019**
(21) Numéro de dépôt: 12790605.5
(22) Date de dépôt: 18.10.2012
(51) Int. Cl.: F16F 15/14, F16H 45/02

(54) **SYSTEME D'AMORTISSEMENT DE TYPE OSCILLATEUR PENDULAIRE COMPORTANT UN DISPOSITIF DE GUIDAGE PERFECTIONNE**
PENDELOSZILLATORARTIGES DÄMPFUNGSSYSTEM MIT VERBESSERTER FÜHRUNGSVORRICHTUNG
PENDULUM-OSCILLATOR-TYPE DAMPING SYSTEM COMPRISING AN IMPROVED GUIDING DEVICE

(30) Priorité: 19.10.2011 FR 1159442; 17.07.2012 FR 1256887
(43) Date de publication de la demande: 27.08.2014
(73) Titulaire: Valeo Embrayages, 80009 Amiens Cedex 2 (FR)
(72) Inventeur: VERHOOG, Roel, F-60190 Gournay sur Aronde (FR)
(74) Mandataire: Cardon, Nicolas
(86) Numéro de dépôt international: PCT/FR2012/052386
(87) Numéro de publication internationale: WO 2013/057441

(56) Documents cités:
- DE-A1-102010 011 824
- GB-A- 2 354 055
- US-A1- 2002 062 713

## Description

La présente invention concerne un système d'amortissement de type oscillateur pendulaire comportant un dispositif de guidage perfectionné.

On connaît de l'état de la technique de tels systèmes d'amortissement qui, encore appelés oscillateur pendulaire ou pendule, équipent notamment mais non exclusivement la transmission d'un véhicule automobile.

Dans une transmission de véhicule automobile, on associe généralement au moins un système d'amortissement de torsion à un embrayage apte à relier sélectivement le moteur à la boîte de vitesses, tel qu'un embrayage à friction ou un appareil d'accouplement hydrocinétique comportant un embrayage de verrouillage, et cela afin de filtrer les vibrations dues aux acyclismes du moteur.

En effet, un moteur à explosion présente des acyclismes du fait des explosions se succédant dans les cylindres du moteur, lesdits acyclismes variant notamment en fonction du nombre de cylindres.

Les moyens amortisseurs d'un système d'amortissement de torsion ont par conséquent pour fonction de filtrer les vibrations engendrées par les acyclismes et interviennent avant la transmission du couple moteur à la boîte de vitesses.

A défaut, des vibrations pénétrant dans la boîte de vitesse y provoqueraient en fonctionnement des chocs, bruits ou nuisances sonores particulièrement indésirables.

C'est l'une des raisons pour lesquelles, on utilise un ou plusieurs moyens d'amortissement aptes à filtrer les vibrations à au moins une fréquence déterminée.

Dans le domaine des transmissions, la recherche de l'obtention d'une filtration toujours plus performante a conduit à adjoindre, pour certaines applications, un système d'amortissement de type oscillateur pendulaire aux systèmes d'amortissement ou amortisseurs conventionnellement mis en œuvre, tant dans les embrayages à friction que dans les appareils d'accouplement hydrocinétique de véhicule automobile.

Les documents GB 2 354 055 A et US-2010/0122605 représentent un tel système d'amortissement de type oscillateur pendulaire.

Le système d'amortissement comporte un organe de support et au moins une paire de masselottes, généralement plusieurs paires de masselottes réparties circonférentiellement sur le pourtour de l'organe de support.

Les paires de masselottes sont agencées autour de l'axe de rotation de l'arbre moteur et chaque paire de masselottes est libre d'osciller autour d'un axe fictif sensiblement parallèle à l'axe de rotation de l'arbre moteur.

Tel qu'illustré à la figure 4 de ce document, les masselottes d'une paire sont reliées entre elles par des moyens de liaison, tels que des rivets, chaque moyen de liaison traversant une ouverture ménagée à cet effet dans l'organe de support et les extrémités du moyen de liaison étant chacune solidaires de l'une des masselottes de la paire, par exemple fixées aux masselottes par rivetage.

Outre les moyens de liaison, le système d'amortissement comporte au moins un dispositif de guidage des masselottes par rapport à l'organe de support, le dispositif de guidage comportant des éléments de roulement, tels que des rouleaux cylindriques.

Chaque élément de roulement coopère avec une paire de pistes opposées, respectivement une première piste portée par chacune des masselottes de la paire et une deuxième piste formée par l'un des bords d'une lumière que comporte l'organe de support.

En réaction aux irrégularités de rotation, lesdites masselottes se déplacent de manière à ce que le centre de gravité de chacune des masselottes oscille autour d'un axe sensiblement parallèle à l'axe de rotation de l'arbre moteur.

La position radiale du centre de gravité de chacune des masselottes par rapport à l'axe de rotation de l'arbre moteur, comme la distance de ce centre de gravité par rapport à l'axe fictif d'oscillation, sont établies de manière à ce que, sous l'effet des forces centrifuges, la fréquence d'oscillation de chacune des masselottes soit proportionnelle à la vitesse de rotation de l'arbre moteur, ce multiple pouvant par exemple prendre une valeur proche du rang de l'harmonique prépondérant des vibrations responsables des fortes irrégularités de rotation au voisinage du ralenti.

Comme illustré à la figure 4 du document US-2010/0122605, le système d'amortissement comporte trois rivets et deux éléments de roulement qui sont interposés circonférentiellement entre deux rivets consécutifs.

Un tel système d'amortissement, et tout particulièrement le dispositif de guidage des masselottes, ne donne toutefois pas entière satisfaction et présente différents inconvénients.

L'organe de support est fragilisé par la présence des ouvertures pour le passage des moyens de liaison d'une part et des lumières de guidage associées aux éléments de roulement d'autre part.

Dans l'exemple du document US-2010/0122605, ce sont ainsi pour chaque paire de masselottes pas moins de cinq découpes qui sont nécessaires, respectivement trois ouvertures et deux lumières, lesdites découpes affectant la tenue mécanique de l'organe de support.

De plus, la présence des découpes a également une incidence sur la conception du système d'amortissement dès lors que, agencées circonférentiellement à la périphérie radiale de l'organe de support et successivement les unes à côté des autres, les ouvertures et les lumières limitent le nombre de paires de masselottes pouvant être montées sur un organe de support d'un diamètre donné.

Un tel système d'amortissement de type pendule bifilaire requiert une très bonne qualité de découpe qu'il est difficile d'atteindre compte tenu des procédés de découpe employés en production industrielle.

En effet, les procédés de découpe usuels conduisent à la présence de rayures ou stries dans la direction axiale, c'est-à-dire suivant l'épaisseur.

Dans le cas de l'organe de support par exemple, de telles rayures sont présentes sur le bord de chaque lumière formant la deuxième piste de guidage avec laquelle coopère l'élément de roulement car les deux lumières dans l'organe de support et tout particulièrement de chacune des deuxièmes pistes de guidage sont généralement obtenues par une découpe conventionnelle à la presse.

Ces problèmes d'état de surface se posent également avec les masselottes comportant les premières pistes de guidage des éléments de roulement qui sont obtenues à la presse par découpe des masselottes, complétées par une opération d'arasage.

Or l'état de surface des pistes de guidage détermine la qualité de roulement, notamment la régularité du mouvement lors du roulement. De plus, l'état de surface des pistes de guidage a une incidence sur les usures de l'élément de roulement ainsi que sur la pression de contact maximale supportée.

D'autres procédés de découpe particuliers pourraient être mis en œuvre pour améliorer l'état de surface des pistes de guidage mais auraient alors des conséquences inacceptables en terme de coûts.

De plus, la réalisation d'au moins une lumière pour former, dans chacune des masselottes, la deuxième piste de guidage associée audit au moins un élément de roulement conduit à réduire d'autant la masse totale de chaque masselotte et, par conséquent, l'efficacité en fonctionnement du système d'amortissement qui, pour un encombrement donné, présente une moindre masse totale.

La longueur axiale des éléments de roulement, tels que les rouleaux, implique aussi un risque de mise en biais des masselottes par rapport à l'organe de support.

Enfin, lorsque le système d'amortissement est en centrifugation, les éléments de roulement travaillent alors en flexion induisant de fortes contraintes mécaniques dans les éléments et des problèmes d'usure.

Le but de la présente invention est donc tout particulièrement de proposer une conception permettant de résoudre les inconvénients précités d'un tel système d'amortissement et d'en améliorer les performances, tout en conservant notamment un faible encombrement et un fonctionnement optimal.

Dans ce but, l'invention propose un système d'amortissement, notamment pour une transmission de véhicule automobile, ayant un axe (X) de rotation et comportant au moins :
- un organe de support apte à être entraîné en rotation autour de l'axe (X) de rotation,
- au moins une première masselotte et une deuxième masselotte aptes à osciller par rapport à l'organe de support dans un plan de rotation orthogonal à l'axe (X) de rotation, lesdites première et deuxième masselottes étant montées axialement de part et d'autre dudit organe de support et reliées axialement l'une à l'autre par l'intermédiaire d'au moins un moyen de liaison, et
- au moins un dispositif de guidage des première et deuxième masselottes par rapport à l'organe de support comportant au moins un élément de roulement apte à rouler sur une paire de pistes opposées, respectivement une première piste de guidage et une deuxième piste de guidage qui est portée par l'organe de support,
ledit système étant remarquable en ce que la première piste de guidage est portée par une entretoise s'étendant axialement entre la première masselotte et la deuxième masselotte et s'étend axialement entre la première masselotte et la deuxième masselotte.

Ainsi, le dispositif de guidage selon l'invention permet d'optimiser la masse des masselottes du système d'amortissement en supprimant les enlèvements de matière auparavant nécessaire pour y réaliser les pistes de guidage des éléments de roulement.

En outre, grâce à l'invention, les efforts en flexion s'appliquant auparavant aux éléments de roulement avec les conceptions de l'état de la technique sont supprimés au bénéfice pour les éléments de roulement uniquement sollicités en compression d'une réduction des contraintes mécaniques et donc d'une plus grande longévité du fait d'une moindre usure.

Selon d'autres caractéristiques de l'invention :
- les moyens de liaison reliant axialement la première masselotte et la deuxième masselotte traversent axialement une ouverture associée dudit organe de support et en ce que la première piste de guidage s'étend au travers de ladite ouverture associée dudit organe.
- la première piste de guidage est portée par lesdits moyens de liaison.
- l'entretoise présente des moyens de butée de fin de course aptes à coopérer avec une face de butée de l'ouverture de l'organe de support pour limiter les oscillations de ladite au moins une masselotte par rapport audit au moins un organe de support.
- les moyens de butée sont formés d'au moins un élément élastomère fixé sur l'entretoise.
- l'entretoise constitue des moyens de butée de fin de course apte à coopérer avec une face de butée de l'ouverture de l'organe de support pour limiter les oscillations de ladite au moins une masselotte par rapport audit au moins un organe de support.
- l'entretoise présente des moyens d'absorption en élastomère pour s'interposer entre les moyens de butée formés de l'entretoise et les faces de l'ouverture.
- l'ouverture de l'organe de support est équipée des moyens d'absorption en élastomère pour s'interposer entre les moyens de butée formés de l'entretoise et les faces de l'ouverture.
- le système comporte au moins deux dispositifs de guidage, respectivement au moins un premier dispositif de guidage et un deuxième dispositif de guidage, qui sont interposés axialement entre ledit au moins un organe de support et lesdites première et deuxième masselottes.
- les moyens de liaison sont constitués par au moins deux entretoises intervenant entre lesdites première et deuxième masselottes, chaque entretoise présentant globalement une forme en "H" comportant respectivement deux barres axiales dont les extrémités sont solidaires de l'une ou l'autre des lesdites première et deuxième masselottes et un barre intermédiaire qui, reliant centralement entre elles les barres axiales, comporte ladite première piste de guidage avec laquelle coopère l'élément de roulement ;
- l'entretoise est une pièce monobloc obtenue par frappe ;
- l'entretoise est réalisée en au moins deux parties, respectivement une pièce qui, formant la barre intermédiaire, comporte à chaque extrémité un trou pour le montage d'une paire de rivets constituant les autres pièces ;
- en coupe par un plan radial médian de l'organe de support orthogonal à l'axe de rotation, la première piste de guidage portée par la barre intermédiaire présente un profil concave et la deuxième piste de guidage portée par l'organe de support présente un profil convexe ;
- en fonctionnement, l'élément de roulement du dispositif de guidage est sollicité uniquement en compression entre lesdites première et deuxième pistes de guidage ;
- le dispositif de guidage comporte des moyens de butée axiale pour limiter les déplacements axiaux de chacune des masselottes par rapport à l'organe de support, lesdits moyens de butée étant portés par ledit élément de roulement interposés radialement entre les première et deuxième pistes de guidage ;
- les moyens de butée sont formés par deux rebords annulaires qui, s'étendant radialement, sont respectivement solidaires des extrémités axiales de l'élément de roulement ;
- le système comporte un troisième dispositif de guidage qui, agencé en triangle avec les deux autres dispositifs de guidage, est destiné à assurer une stabilité axiale en limitant le basculement des première et deuxième masselottes par rapport audit organe de support ;
- les moyens de liaison constituent des moyens de butée de fin de course aptes à coopérer avec une face de butée de l'ouverture de l'organe de support pour limiter les oscillations de ladite au moins une masselotte par rapport audit au moins un organe de support.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en perspective qui représente un système d'amortissement de type oscillateur pendulaire selon un mode de réalisation de l'invention ;
- la figure 2 est une vue en perspective qui représente en éclaté le système d'amortissement de la figure 1 ;
- la figure 3 est une vue en perspective qui représente, après mise en transparence d'une masselotte, le système d'amortissement des figures 1 et 2 et qui illustrent les dispositifs de guidage lorsque le système d'amortissement est au repos ;
- la figure 4 est une vue de côté d'un système d'amortissement selon le mode de réalisation représenté aux figures 1 à 3 ;
- les figures 5 et 6 sont des vues en coupe axiale qui représentent le système d'amortissement selon la figure 1 et qui illustrent plus particulièrement, pour la figure 5, une entretoise reliant axialement les masselottes et, pour la figure 6, la première piste que comporte ladite entretoise et avec laquelle coopère l'élément de roulement.
- la figure 7 est une vue de côté d'un système d'amortissement selon l'invention dans lequel l'entretoise reliant axialement les masselottes et comportant la piste de roulement est équipée de moyens d'absorption en élastomère ;
- la figure 8 est une vue de côté d'un système d'amortissement selon l'invention dans lequel l'ouverture de l'organe de support au travers de laquelle passe l'entretoise est équipée de moyens d'absorption en élastomère.

Dans la suite de la description et les revendications, on utilisera à titre non limitatif et afin d'en faciliter la compréhension, les termes "externe" et "interne" ainsi que les orientations "axiale" et "radiale" pour désigner, selon les définitions données dans la description, des éléments du système d'amortissement.

Par convention, l'orientation "radiale" est dirigée orthogonalement à l'axe (X) de rotation du système d'amortissement déterminant l'orientation "axiale" et, de l'intérieur vers l'extérieur en s'éloignant dudit axe, l'orientation "circonférentielle" est dirigée orthogonalement à l'axe du système d'amortissement et orthogonalement à la direction radiale.

Les termes "externe" et "interne" sont utilisés pour définir la position relative d'un élément par rapport à un autre, par référence à l'axe de rotation du dispositif d'amortissement, un élément proche de l'axe est ainsi qualifié d'interne par opposition à un élément externe situé radialement en périphérie.

Pour la suite de la description, des éléments présentant des fonctions similaires, identiques ou analogues seront désignés par des mêmes numéros de référence.

L'invention concerne un système 10 d'amortissement qui, ayant un axe X de rotation, est notamment apte à équiper une transmission de véhicule automobile, ledit système 10 d'amortissement comportant en particulier au moins un organe 12 de support et au moins une masselotte 14 pour former un oscillateur pendulaire.

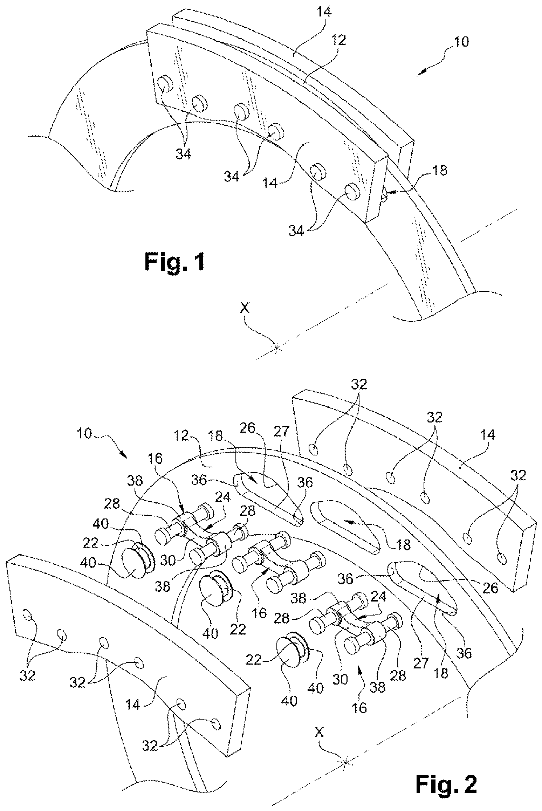

On a représenté à la figure 1, un système 10 d'amortissement de type oscillateur pendulaire selon un mode de réalisation de l'invention donné uniquement à titre d'exemple non limitatif.

Dans ce mode de réalisation, le système 10 comporte un organe 12 de support et au moins une paire de masselottes 14, respectivement une première masselotte et une deuxième masselotte qui sont agencées axialement de part et d'autre dudit organe 12 de support.

L'organe 12 de support est apte à être entraîné en rotation autour de l'axe X de rotation du système 10 d'amortissement.

L'organe 12 de support présente globalement une forme d'anneau comportant deux faces planes sur lesquelles sont rapportées lesdites première masselotte 14 et deuxième masselotte 14.

Un tel système 10 d'amortissement est par exemple susceptible d'être intégré à un amortisseur de torsion (non représenté).

De manière connue, un tel amortisseur de torsion comporte au moins un élément d'entrée, au moins un élément de sortie et des organes élastiques à action circonférentielle qui sont interposés entre lesdits éléments d'entrée et de sortie.

Dans le cas précité d'une application à une transmission de véhicule automobile, l'élément d'entrée est destiné à être entraîné en rotation par un arbre menant (non représenté), tel que le vilebrequin du moteur à combustion interne du véhicule automobile équipé de la transmission, tandis que l'élément de sortie est lié en rotation à un arbre mené (non représenté), tel que l'arbre d'entrée de la boîte de vitesses du véhicule qui est relié aux moyens de changement de rapport de vitesses.

L'organe 12 de support du système d'amortissement 10 de type oscillateur pendulaire peut être constitué par un élément d'entrée dudit amortisseur de torsion, un élément de sortie ou un élément de phasage intermédiaire entre deux série de ressort dudit amortisseur ou en variante un élément lié en rotation à ces éléments.

Le système 10 d'amortissement de type oscillateur pendulaire peut alors être porté, par exemple, par une rondelle de guidage ou une rondelle de phasage, et est agencé à la périphérie radiale externe de ces rondelles.

Par conséquent, la forme de l'organe 12 de support est susceptible, en fonction des applications, de varier de celle d'anneau plat représentée à la figure 1.

Les première et deuxième masselottes 14 sont aptes à osciller par rapport à l'organe 12 de support dans un plan de rotation orthogonal à l'axe X de rotation.

Tel qu'illustré à la figure 1, les première et deuxième masselottes 14 sont montées axialement de part et d'autre dudit organe 12 de support. Les masselottes 14 présentent globalement une forme de plaquette et s'étendent circonférentiellement en arc de cercle de sorte que les masselottes 14 suivent globalement les bords externe et interne de l'organe 12 de support.

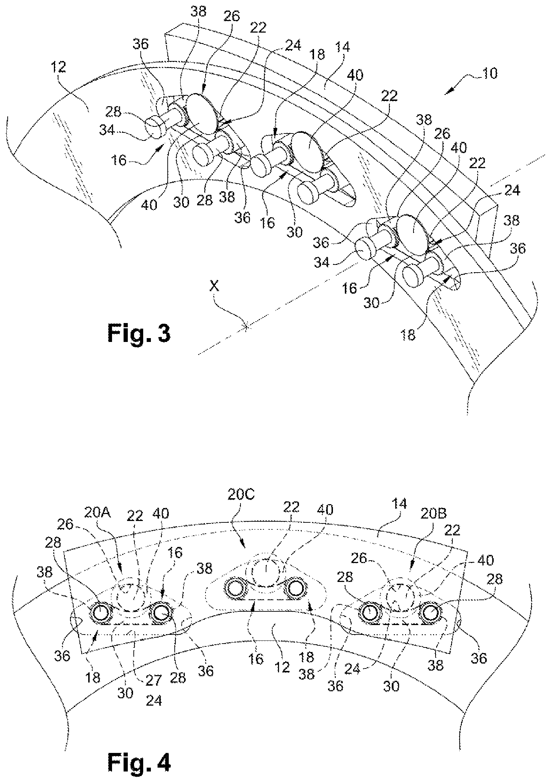

Comme notamment illustré aux figures 2 et 3, les première et deuxième masselottes 14 sont reliées axialement l'une à l'autre par l'intermédiaire d'au moins un moyen 16 de liaison traversant axialement une ouverture 18 associée dudit organe 12 de support.

Les oscillations des masselottes 14 sont accompagnées par au moins un dispositif 20 de guidage des première et deuxième masselottes 14 par rapport à l'organe 12 de support.

Le dispositif 20 de guidage comporte au moins un élément 22 de roulement qui est apte à coopérer avec une paire de pistes opposées.

Selon l'invention, l'élément 22 de roulement coopère respectivement avec une première piste 24 de guidage portée par lesdits moyens 16 de liaison intervenant entre lesdites première et deuxième masselottes 14 et une deuxième piste 26 de guidage qui est portée par l'organe 12 de support.

Avantageusement, les moyens 16 de liaison forment une entretoise déterminant notamment l'écartement axial entre les masselottes 14 et le jeu par rapport à l'organe 12 de support.

De préférence, les moyens 16 de liaison sont constitués par au moins deux entretoises qui sont respectivement agencées à l'une et l'autre des extrémités des masselottes 14.

Selon le mode de réalisation représenté aux figures, l'entretoise 16 présente globalement une forme en "H" et comporte respectivement deux barres 28 d'orientation axiale qui sont reliées entre elles par une barre 30 intermédiaire.

La barre 30 intermédiaire relie centralement entre elles lesdites barres 28 axiales et comporte une face externe formant ladite première piste 24 de guidage avec laquelle coopère l'élément 22 de roulement.

Chacune des barres 28 axiales de l'entretoise 16 comporte une extrémité qui est reçue dans un trou 32 complémentaire de l'une des masselottes 14.

Les trous 32 sont débouchant, la fixation des masselottes 14 avec chaque entretoise 16 est avantageusement réalisée par rivetage, les têtes 34 en résultant sont plus particulièrement visibles sur la figure 1.

Les extrémités de chacune des barres 28 axiales de l'entretoise 16 sont ainsi solidaires de l'une ou l'autre des première et deuxième masselottes 14.

Avantageusement, l'entretoise 16 est une pièce monobloc qui est obtenue par frappe.

En variante, l'entretoise est réalisée en au moins deux pièces, respectivement une pièce qui, formant la barre intermédiaire, comporte à chaque extrémité un trou axial pour le montage dans chacun d'une paire de rivets constituant les autres pièces.

Dans une telle variante, les pièces sont avantageusement associées à l'une des fonctions, la fonction de guidage de l'élément de roulement d'une part pour la pièce formant la barre intermédiaire et la fonction de liaison des masselottes pour les rivets.

De préférence, l'élément 22 de roulement est un rouleau.

De préférence, le rouleau est une pièce pleine mais, en variante, pourrait être une pièce évidée formant un tube.

Chaque entretoise 16 est reçue dans une ouverture 18 associée de l'organe 12 de support, ladite ouverture 18 ayant globalement une forme triangulaire.

L'ouverture 18 est délimitée radialement par un bord externe formant la deuxième piste 26 de guidage de l'élément 22 de roulement et, radialement à l'opposé, par un bord 27 interne, ici globalement rectiligne.

Les bords externe et interne de l'ouverture 18 se raccordent à chaque extrémité par une face 36 qui constitue une butée susceptible de coopérer avec l'entretoise 16 pour limiter le débattement des masselottes 14 en fonctionnement.

Plus précisément, la partie de l'entretoise 16 destinée à coopérer avec l'une des faces 36 de butée de l'ouverture 18 est constituée par l'extrémité 38 de la barre 30 intermédiaire de l'entretoise 16, soit celle se raccordant au tronçon central de chacune des barres 28 axiales.

L'entretoise 16 formant les moyens de liaison comportent donc des moyens de butée de fin de course formés par lesdites extrémités 38 qui sont aptes à limiter les oscillations des masselottes 14 par rapport à l'organe 12 de support.

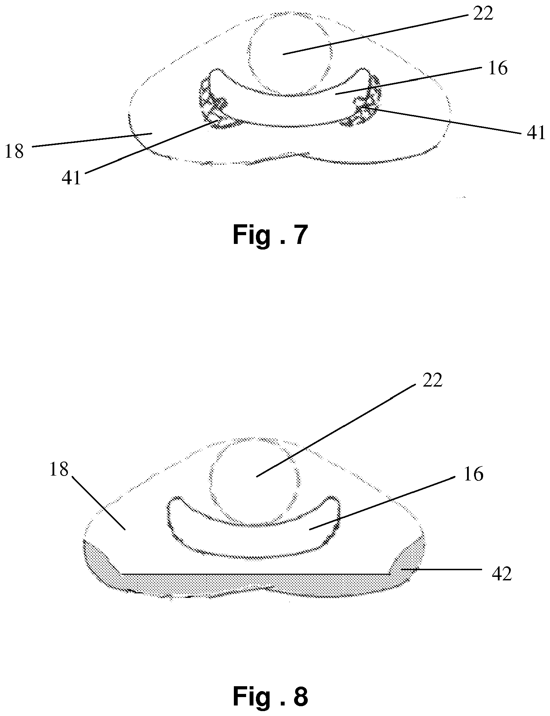

Dans les modes de réalisation représentés sur les figures 7 et 8, des moyens d'absorption 41, 42 sont interposés entre les moyens de butée formés respectivement par les extrémités 38 de l'entretoise 16 et les faces 36 de l'ouverture 18.

Sur la figure 7, l'entretoise 16 est équipée d'éléments en élastomère 41 qui permettent d'amortir les vibrations. Les éléments en élastomère 41 peuvent être fixés sur l'entretoise 16 par surmoulage, collage ou coopération de forme (queue d'arronde, par exemple). Les éléments en élastomère 41 peuvent également être fixés sur un élément intermédiaire venant se clipser sur l'entretoise

Sur la figure 8, l'ouverture 18 de l'organe de support au travers de laquelle passe l'entretoise 16 est équipée de moyens d'absorption en élastomère 42. De même, lesdits éléments en élastomère 42 peuvent être fixés dans les ouvertures 18 par surmoulage, collage ou coopération de forme. Les éléments en élastomère 41 peuvent également être fixés sur un élément intermédiaire venant se clipser sur l'organe 12 de support.

Selon une autre variante non représentée, des moyens d'absorption sont interposés radialement entre l'élément 22 de roulement et l'ouverture 18 de l'organe 12 de support.

De tels moyens d'absorption sont par exemples constitués par des blocs en matière élastomère qui sont interposés entre la barre 30 intermédiaire de l'élément 22 de roulement et le bord interne 27 de l'ouverture 18 de manière à éviter tout contact direct entre le moyen 16 de liaison et l'organe 12 de support.

En coupe par un plan radial médian de l'organe 12 de support orthogonal à l'axe X de rotation ou tel qu'illustré sur la figure 4 par la mise en transparence de l'une des masselottes 14, la première piste 24 de guidage portée par la barre 30 intermédiaire de l'entretoise 16 présente un profil concave et la deuxième piste 26 de guidage portée par l'organe 12 de support et formée par le bord externe de l'ouverture 18 présente un profil convexe.

Avantageusement, en fonctionnement, l'élément 22 de roulement du dispositif 20 de guidage est sollicité uniquement en compression entre lesdites première et deuxième pistes 24, 26 de guidage grâce à quoi on réduit notamment les contraintes lorsque le système 10 est en centrifugation ainsi que les problèmes d'usure de l'élément 22 de roulement.

Avantageusement, ledit au moins un dispositif 20 de guidage comporte des moyens 40 de butée axiale pour limiter les déplacements axiaux de chacune des masselottes 14 par rapport à l'organe 12 de support.

De préférence, lesdits moyens 40 de butée sont portés par l'élément 22 de roulement interposés radialement entre les première et deuxième pistes 24, 26 de guidage.

Tel qu'illustré par les figures 2 à 4, les moyens 40 de butée sont formés par deux rebords annulaires qui, s'étendant radialement, sont respectivement solidaires des extrémités axiales de l'élément 22 de roulement.

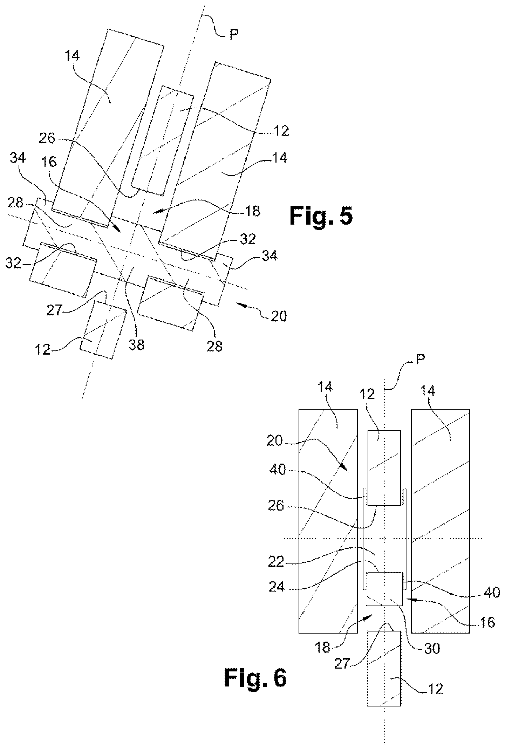

Comme l'illustre la coupe de la figure 6, les moyens 40 de butée sont susceptibles de venir coopérer avec l'une ou l'autre des faces de l'organe 12 de support.

Avantageusement, les moyens 40 de butée sont venus de matière avec l'élément 22 de roulement de manière à former un ensemble monobloc.

De préférence, le système 10 d'amortissement comporte au moins deux dispositifs 20 de guidage, respectivement au moins un premier dispositif 20A de guidage et un deuxième dispositif 20B de guidage, qui sont interposés axialement entre ledit au moins un organe 12 de support et lesdites première et deuxième masselottes 14.

Avantageusement, le système 10 d'amortissement comporte un troisième dispositif 20C de guidage qui est analogue aux deux autres dispositifs 20A et 20B de guidage.

Le troisième dispositif 20C de guidage est agencé en triangle avec les deux autres dispositifs 20A, 20B de guidage,c'est-à-dire qu'il n'est pas aligné avec les deux autres.

Le troisième dispositif 20C est destiné à assurer une stabilité axiale en limitant le basculement des première et deuxième masselottes 14 par rapport audit organe 12 de support.

L'élément 22 de roulement du troisième dispositif 20C de guidage présente radialement un jeu déterminé, par exemple de l'ordre de quelques dixièmes et ne constitue donc pas un élément porteur des masselottes 14 contrairement aux éléments 22 de roulement des deux autres dispositifs 20A et 20B de guidage.

De préférence et tel qu'illustré sur les coupes des figures 5 et 6, le dispositif 10 d'amortissement présente une symétrie de conception par rapport à un plan P radial médian de l'organe 12 de support orthogonal à l'axe X de rotation.

## Revendications

1. Système (10) d'amortissement, notamment pour une transmission de véhicule automobile, ayant un axe (X) de rotation et comportant au moins :
- un organe (12) de support apte à être entraîné en rotation autour de l'axe (X) de rotation,
- au moins une première masselotte (14) et une deuxième masselotte (14) aptes à osciller par rapport à l'organe (12) de support dans un plan de rotation orthogonal à l'axe (X) de rotation, lesdites première et deuxième masselottes (14) étant montées axialement de part et d'autre dudit organe (12) de support et reliées axialement l'une à l'autre par l'intermédiaire d'une entretoise (16), et
- au moins un dispositif (20) de guidage des première et deuxième masselottes (14) par rapport à l'organe (12) de support comportant au moins un élément (22) de roulement apte à rouler sur une paire de pistes opposées, respectivement une première piste (24) de guidage s'étendant axialement entre la première masselotte (14) et la deuxième masselotte (14), et une deuxième piste (26) de guidage qui est portée par l'organe (12) de support,
**caractérisé en ce que** la première piste (24) de guidage est portée par entretoise (16) s'étendant axialement entre la première masselotte (14) et la deuxième masselotte (14).

2. Système (10) d'amortissement selon la revendication 1, **caractérisé en ce que** l'entretoise (16) reliant axialement la première masselotte (14) et la deuxième masselotte (14) traverse axialement une ouverture (18) associée dudit organe (12) de support et **en ce que** la première piste (24) de guidage s'étend au travers de ladite ouverture (18) associée dudit organe (12).

3. Système (10) d'amortissement selon la revendication 2, **caractérisé en ce que** la première piste (24) de guidage est portée par ladite entretoise (16).

4. Système (10) d'amortissement selon la revendication 2 ou 3, **caractérisé en ce que** l'entretoise (16) constitue des moyens (38) de butée de fin de course aptes à coopérer avec une face (36) de butée de l'ouverture (18) de l'organe (12) de support pour limiter les oscillations de ladite au moins une masselotte (14) par rapport audit au moins un organe (12) de support.

5. Système (10) d'amortissement selon la revendication 4, **caractérisé en ce que** l'entretoise (16) présente des moyens d'absorption en élastomère pour s'interposer entre les moyens (38) de butée formés de l'entretoise (16) et les faces (36) de l'ouverture (18).

6. Système (10) d'amortissement selon la revendication 4, **caractérisé en ce que** l'ouverture (18) de l'organe de support est équipée des moyens d'absorption en élastomère pour s'interposer entre les moyens (38) de butée formés de l'entretoise (16) et les faces (36) de l'ouverture (18).

7. Système (10) d'amortissement selon l'une quelconque des revendications précédentes, **caractérisé en ce que** le système (10) comporte au moins deux dispositifs (20) de guidage, respectivement au moins un premier dispositif (20A) de guidage et un deuxième dispositif (20B) de guidage, qui sont interposés axialement entre ledit au moins un organe (12) de support et lesdites première et deuxième masselottes (14).

8. Système (10) d'amortissement selon l'une quelconque des revendications précédentes, **caractérisé en ce que** deux entretoises (16) interviennent entre les première et les deuxième masselottes (14).

9. Système (10) d'amortissement selon l'une quelconque des revendications précédentes, **caractérisé en ce que** l'entretoise (16) est une pièce monobloc obtenue par frappe.

## Patentansprüche

1. Dämpfungssystem (10), insbesondere für eine Kraftfahrzeuggetriebe, das eine Drehachse (X) aufweist und mindestens Folgendes umfasst:
- ein Tragelement (12), das geeignet ist, um die Drehachse (X) herum in Drehung versetzt zu werden,
- mindestens ein erstes Gewicht (14) und ein zweites Gewicht (14), die geeignet sind, bezogen auf das Tragelement (12) in einer Drehebene orthogonal zur Drehachse (X) zu schwingen, wobei das erste und das zweite Gewicht (14) beiderseits des Tragelements (12) axial angebracht sind und mittels eines Distanzstücks (16) axial miteinander verbunden sind, und
- mindestens eine Vorrichtung (20) zur Führung des ersten und des zweiten Gewichts (14) bezogen auf das Tragelement (12), aufweisend mindestens ein Rollelement (22), das geeignet ist, auf einem Paar gegenüberliegender Bahnen, jeweils einer ersten Führungsbahn (24), die sich axial zwischen dem ersten Gewicht (14) und dem zweiten Gewicht (14) erstreckt, und einer zweiten Führungsbahn (26), die von dem Tragelement (12) getragen wird, zu rollen,
**dadurch gekennzeichnet, dass** die erste Führungsbahn (24) von dem Distanzstück (16) getragen wird, das sich axial zwischen dem ersten Gewicht (14) und dem zweiten Gewicht (14) erstreckt.

2. Dämpfungssystem (10) nach Anspruch 1, **dadurch gekennzeichnet, dass** das Distanzstück (16), welches das erste Gewicht (14) und das zweite Gewicht (14) axial verbindet, eine zugehörige Öffnung (18) des Tragelements (12) axial durchquert, und dadurch, dass sich die erste Führungsbahn (24) durch die zugehörige Öffnung (18) des Elements (12) hindurch erstreckt.

3. Dämpfungssystem (10) nach Anspruch 2, **dadurch gekennzeichnet, dass** die erste Führungsbahn (24) von dem Distanzstück (16) getragen wird.

4. Dämpfungssystem (10) nach Anspruch 2 oder 3, **dadurch gekennzeichnet, dass** das Distanzstück (16) Endanschlagmittel (38) bildet, die geeignet sind, mit einer Anschlagfläche (36) der Öffnung (18) des Tragelements (12) zusammenzuwirken, um die Schwingungen des mindestens einen Gewichts (14) bezogen auf das mindestens eine Tragelement (12) zu begrenzen.

5. Dämpfungssystem (10) nach Anspruch 4, **dadurch gekennzeichnet, dass** das Distanzstück (16) Absorptionsmittel aus Elastomer aufweist, um sich zwischen die Anschlagmittel (38), die von dem Distanzstück (16) gebildet sind, und die Flächen (36) der Öffnung (18) einzufügen.

6. Dämpfungssystem (10) nach Anspruch 4, **dadurch gekennzeichnet, dass** die Öffnung (18) des Tragelements mit Absorptionsmitteln aus Elastomer ausgestattet ist, um sich zwischen die Anschlagmittel (38), die von dem Distanzstück (16) gebildet sind, und die Flächen (36) der Öffnung (18) einzufügen.

7. Dämpfungssystem (10) nach einem der vorhergehenden Ansprüche, **dadurch gekennzeichnet, dass** das System (10) mindestens zwei Führungsvorrichtungen (20), jeweils mindestens eine erste Führungsvorrichtung (20A) und eine zweite Führungsvorrichtung (20B), aufweist, die axial zwischen dem mindestens einen Tragelement (12) und dem ersten und dem zweiten Gewicht (14) eingefügt sind.

8. Dämpfungssystem (10) nach einem der vorhergehenden Ansprüche, **dadurch gekennzeichnet, dass** sich zwei Distanzstücke (16) zwischen dem ersten und dem zweiten Gewicht (14) befinden.

9. Dämpfungssystem (10) nach einem der vorhergehenden Ansprüche, **dadurch gekennzeichnet, dass** das Distanzstück (16) ein einstückiges Teil ist, das durch Schlagen erhalten wird.

## Claims

1. A damping system (10), in particular for a motor vehicle transmission, having a rotation axis (X) and comprising at least:
_ a support member (12) able to be caused to rotate around the rotation axis(X),
_ at least one first flyweight (14) and one second flyweight (14) able to oscillate with respect to the support member (12) in a rotation plane orthogonal to the rotation axis (X), said first and second flyweights (14) being mounted axially on either side of said support member (12) and connected axially to one another by means of a spacer (16), and
_ at least one device (20) for guiding the first and second flyweights (14) with respect to the support member (12), having at least one bearing element (22) able to roll on a pair of opposite tracks, respectively a first guidance track (24)and a second guidance track (26) that is carried by the support member (12),**characterized in that** the first guidance track (24) is carried by the spacer (16) extending axially between the first flyweight(14) and the second flyweight (14).

2. The damping system (10) according to Claim 1, wherein the spacer (16) axially connecting the first flyweight (14) and the second flyweight (14) passes axially through an associated opening (18) of said support member (12); and the first guidance track (24) extends through said associated opening (18) of said member (12).

3. The damping system (10) according to Claim 1 or 2, wherein the first guidance track (24) is carried by said spacer (16).

4. The damping system (10) according to claim 2 or 3, wherein the spacer (16) constitutes stop abutment means (38) able to interact with an abutment surface (36) of the opening (18) of the support member (12) in order to limit the oscillations of said at least one flyweight (14) with respect to said at least one support member (12) .

5. The damping system (10) according to Claim 4, wherein the spacer (16)comprises elastomeric absorption means for interposition between the abutment means (38) formed by the spacer (16) and the surfaces (36) of the opening (18) .

6. The damping system (10) according to Claim 4, wherein the opening (18) of the support member is equipped with elastomeric absorption means for interposition between the abutment means (38) formed by the spacer (16) and the surfaces (36) of the opening (18).

7. The damping system (10) according to any one of the preceding claims, wherein the system (10) has at least two guidance devices (20), respectively at least one first guidance device (20A) and one second guidance device (20B), which are interposed axially between said at least one support member (12) and said first and second flyweights (14).

8. The damping system (10) according to any one of the preceding claims, wherein two spacers are disposed between the first and second flyweight (14).

9. The damping system (10) according to any one of the preceding claims, wherein the spacer (16) is a monobloc piece realized by hit.
